# EUROPEAN PATENT SPECIFICATION

(11) **EP 4 650 650 B1**
(45) Date of publication and mention of the grant of the patent: **28.10.2026**
(21) Application number: 24909957.3
(22) Date of filing: 03.09.2024
(51) Int. Cl.: G05D 7/06, F17D 3/01, G06N 3/08, C21C 5/46, F16K 31/04

(54) **FLOW REGULATION CONTROL METHOD FOR GAS SUPPLY VALVE GROUP**
VERFAHREN ZUR STEUERUNG DER DURCHFLUSSREGELUNG FÜR EINE GASVERSORGUNGSVENTILGRUPPE
PROCÉDÉ DE COMMANDE DE RÉGULATION DE FLUX POUR GROUPE DE SOUPAPES D'ALIMENTATION EN GAZ

(30) Priority: 27.12.2023 CN 202311824475
(43) Date of publication of application: 19.11.2025
(73) Proprietor: Central Iron & Steel Research Institute Company Limited, Beijing 100081 (CN)
(72) Inventor: ZHAO, Ge, Beijing 100081 (CN); WANG, Jie, Beijing 100081 (CN); YANG, Libin, Beijing 100081 (CN); YANG, Yong, Beijing 100081 (CN); LIN, Ying, Beijing 100081 (CN); ZHAO, Jinxuan, Beijing 100081 (CN); WANG, Chengyi, Beijing 100081 (CN); DAI, Yuxiang, Beijing 100081 (CN); CAI, Wei, Beijing 100081 (CN)
(74) Representative: Mewburn Ellis LLP
(86) International application number: PCT/CN2024/116625
(87) International publication number: WO 2025/139011

(56) References cited:
- CN-A- 104 073 588
- CN-A- 111 022 737
- CN-A- 111 765 287
- CN-A- 114 637 343
- CN-A- 117 212 877
- CN-A- 117 821 695
- CN-A- 117 847 438
- JP-A- 2011 047 000
- US-A1- 2009 125 154
- US-B2- 11 774 989

## Description

### TECHNICAL FIELD

The invention belongs to the field of steel metallurgical technology, and in particular, to a flow regulation controlling method for gas supply valve group.

### BACKGROUND ART

During the steel smelting process of a converter, blowing gas from the bottom of the converter into high-temperature molten pool can effectively improve the agitation of molten metal for promoting the reaction of slag steel and further promote the uniformity of the molten metal composition and temperature, which can improve the smelting quality and efficiency of the converter. According to the production smelting characteristics of the converter, blowing gas from the bottom of the converter is intermittent cyclical gas supply, and blowing gas supply flow from the bottom of the converter should be regulated according to the characteristics of the different smelting stages of the converter in each cycle.

According to the control needs of converter smelting process, the gas flow in different smelting processes needs to be regulated quickly and accurately to meet the needs of flow regulation in different smelting stages of the converter. Most of the existing bottom blowing gas supply models set the flow according to the model, and automatically regulate the flow by the system regulating valve or flow regulating device. The regulation speed and accuracy of this method mainly depend on own characteristics of the system regulating valve or the flow regulating device, a large range regulation of related devices is needed during each flow regulation process; the regulation speed is slow, the stability and accuracy of the related devices are affected by frequent actions.

US 11 774 989 B2 discloses a pulse-shot gas flow-rate control device and method. Gas is filled into a tank through a first shutoff valve and discharged through a second shutoff valve. A pressure sensor measures pressure before and after discharge, a controller calculates volume flow rate, corrects filling time by PID control, stores an optimum filling time and performs learning.

### SUMMARY OF THE INVENTION

In view of the above analysis, the present invention aims to provide a flow regulation controlling method for gas supply valve group, so as to solve the problem of slow regulation speed and low regulation accuracy of the flow regulation method of the gas supply model in the smelting process of the existing converter.

The objects of the present invention are mainly realized by the following technical schemes:

A flow regulation controlling method for gas supply valve group includes the following steps:
Step 1: collecting the regulation valve memory openings of gas supply model designed flow Qⱼ under different gas supply branch pressures and main line pressures, establishing the j-th flow memory opening set Kⱼ composed of the regulation valve memory openings of the gas supply model designed flow Qⱼ at different gas supply branch pressures and main line pressures;
Step 2: establishing a set K composed of the j-th flow memory opening set Kⱼ.
Step 3: when the gas supply model performs switch between different designed flows, firstly according to the gas supply model designed flow Qⱼ to be switched, selecting the j-th flow memory opening set Kⱼ corresponding to Qⱼ in the set K;
Step 4: according to the corresponding gas supply branch pressure P₁ᵢ and the main line pressure P₀ᵢ, determining the regulation valve memory opening Kⱼᵢ of the gas supply model design flow Qⱼ under the corresponding gas supply branch pressure P₁ᵢ and the main line pressure P₀ᵢ;
Step 5: regulating the regulation valve to the regulation valve memory opening Kⱼᵢ;
Step 6: after regulating the regulation valve, measuring the actual flow Q_{j'} ;
Step 7: according to the actual flow Q_{j'}, calculating the actual flow accuracy R_{j'}, determining whether the actual flow Q_{j'} is in a stable state by the gas supply model, and calculating the continuous stability rate of the actual flow Q_{j'} in the range of the designed flow regulation accuracy Rⱼ;
Step 8: the gas supply model determines whether updating Kⱼ and K according to update conditions, if not, ending the flow regulation of the gas supply valve, or ending the flow regulation of the gas supply valve after updating.

Further, the step 1 comprises:
Collecting the regulation valve memory openings Kⱼᵢ of the gas supply model designed flow Qⱼ under gas supply branch pressures P₁ᵢ and main line pressures P₀ᵢ, wherein, i= 1, 2, 3 ... n, j= 1, 2, 3 ... m;
Establishing the j-th flow memory opening set Kⱼ composed of the regulation valve memory openings Kⱼᵢ of the gas supply model designed flow Qⱼ under gas supply branch pressures P₁ᵢ and main line pressures P₀ᵢ, Kⱼ = {Kⱼ₁, Kⱼ₂, ..., Kⱼᵢ, ..., Kⱼₙ} , wherein, i = 1, 2, 3 ... n, j = 1, 2, 3 ... m.

Further, the regulation valve memory openings Kⱼᵢ of the gas supply model designed flow Qⱼ under gas supply branch pressures P₁ᵢ and main line pressures P₀ᵢ is the regulation valve opening when tⱼ≥20 % , wherein, tⱼ is the continuous stability rate of the actual flow within the designed regulation accuracy range.

Further, tⱼ=Tⱼ/T₀ⱼ×100%,
wherein, Tⱼ is continuous stability time (s) of the actual flow within the designed regulation accuracy range;
T₀ⱼ is the set gas supply time (s) of the gas supply model designed flow Qⱼ.

Further, the designed flow regulation accuracy Rⱼ=±(7.25-1.161n(Qⱼ)),
wherein, Rⱼ is the designed flow regulation accuracy;
Qⱼ is the gas supply model designed flow, Nm³/h.

Further, in the step 7, determining whether the actual flow Q_{j'} is in a stable state by the gas supply model includes:
If the actual flow regulation accuracy R_{j'}≤ the designed flow regulation accuracy Rⱼ, the actual flow Q_{j'} is in a stable state;
If the actual flow regulation accuracy R_{j'} > the designed flow regulation accuracy Rⱼ, the actual flow Q_{j'} is in a unstable state.

Further, the actual flow regulation accuracy R_{j'}=|(Qⱼ-Q_{j'})/Qⱼ|.

Further, the update conditions include: the gas supply model determines whether the actual flow regulation accuracy R_{j'} is within the range of the designed flow regulation accuracy Rⱼ, and the continuous stability rate tⱼ of the actual flow within the range of the designed flow regulation accuracy Rⱼ is ≥20%.

If the actual flow regulation accuracy R_{j'}≤ the designed flow regulation accuracy Rⱼ, and the continuous stability rate tⱼ of the actual flow within the range of the designed flow regulation accuracy Rⱼ is ≥20%, the actual flow Q_{j'} is in a stable state, no need to update Kⱼ and K, and ending flow regulation of the gas supply valve.

Further, the update conditions also include: if the actual flow regulation accuracy R_{j'}≤ the designed flow regulation accuracy Rⱼ, and the continuous stability rate tⱼ of the actual flow within the range of the designed flow regulation accuracy Rⱼ is < 20%, the actual flow Q_{j'} is in an unstable state, the gas supply model automatically controls the regulation valve opening to make the continuous stability rate tⱼ of the actual flow ≥20% within the range of the designed flow regulation accuracy Rⱼ, recording the regulation valve opening, updating Kⱼ and K, and ending the flow regulation of the gas supply valve.

Further, the update conditions also include: if the actual flow regulation accuracy R_{j'} > the designed flow regulation accuracy Rⱼ, and the continuous stability rate tⱼ of the actual flow within the range of the designed flow regulation accuracy Rⱼ is <20%, the actual flow Q_{j'} is in an unstable state, the gas supply model automatically controls the regulation valve opening to make the continuous stability rate tⱼ of the actual flow ≥20% within the range of the designed flow regulation accuracy Rⱼ, recording the regulation valve opening, updating Kⱼ and K, and ending the flow regulation of the gas supply valve.

Compared with the prior art, the present invention can achieve at least one of the following beneficial effects:
1. The method of the present invention establishes a regulation valve memory opening set of different designed flows under different gas supply branch pressures and main line pressures in the gas supply model, and according to the data in the regulation valve memory opening set, can quickly regulate the regulation valve in the gas supply valve group to corresponding opening when performing corresponding flow regulation in the subsequent process. The flow regulation speed of the regulation valve is ≤10s, the flow regulation accuracy range is ±1Nm³/h, and the flow stability coefficient is ≤0.02. Compared with the prior art, the flow regulation speed and the accuracy are improved.
2. The method of the present invention establishes a regulation valves memory opening set of different design flows under different gas supply branch pressures and main line pressures in the gas supply model, and updates the regulation valve memory opening set according to the regulation result during the subsequently corresponding flow regulation process, thereby ensuring the accuracy of the regulation of the gas supply valve group for the gas supply model.

In the present invention, the above-mentioned technical schemes can also be combined with each other to achieve more preferred combination schemes. Other features and advantages of the present invention will be described in the following description, and some of them will become apparent from the description, or will be understood by implementing the present invention. The purpose and other advantages of the present application can be realized and obtained through the content specially pointed out in the written description and the drawings.

### BRIEF DESCRIPTION OF DRAWINGS

The drawing is only for the purpose of showing specific embodiments, and is not considered to limit the invention. In the whole drawing, the same reference symbols represent the same components.

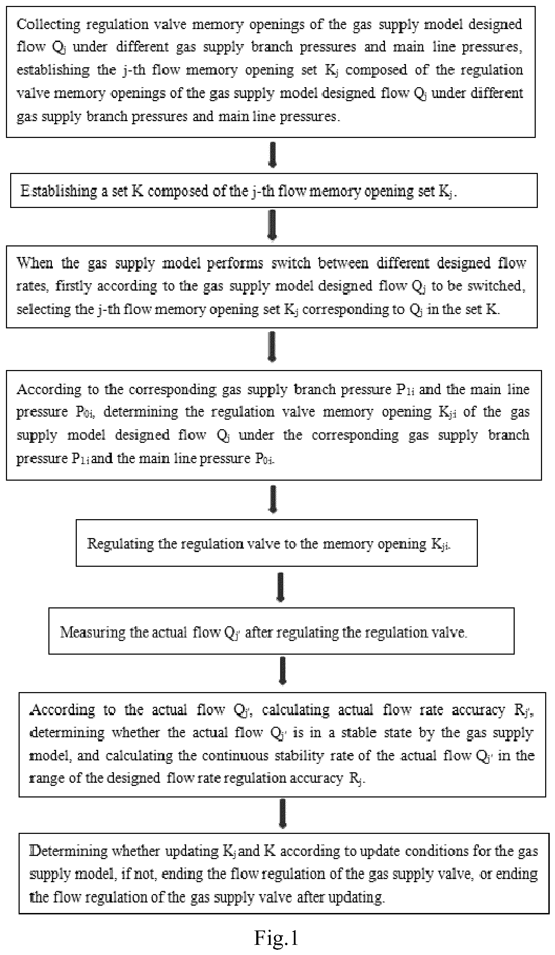

FIG.1 is the flow chart of the flow regulation controlling method of gas supply valve group according to the present invention.

### DETAILED DESCRIPTION OF THE INVENTION

The preferred embodiments of the present invention will be described in detail combining with the accompanying drawing, which form a part hereof, and is used together with the embodiments to explain the principles of the present invention, but are not used to limit the scope of the present invention.

The present invention provides a flow regulation controlling method for gas supply valve group, which includes the following steps:
Step 1: collecting the regulation valve memory openings of the gas supply model designed flow Qⱼ under different gas supply branch pressures and main line pressures, establishing the j-th flow memory opening set Kⱼ composed of the regulation valve memory openings of the gas supply model designed flow Q₁ under different gas supply branch pressures and main line pressures;
Step 2: establishing a set K composed of the j-th flow memory opening set Kⱼ;
Step 3: when the gas supply model performs switch between different designed flows, firstly according to the gas supply model designed flow Qⱼ to be switched, selecting the j-th flow memory opening set Kⱼ corresponding to Qⱼ in the set K;
Step 4: according to the corresponding gas supply branch pressure P₁ᵢ and the main line pressure P₀ᵢ, determining the regulation valve memory opening Kⱼᵢ of the gas supply model designed flow Q₁ under the corresponding gas supply branch pressure P₁ᵢ and the main line pressure P₀ᵢ;
Step 5: regulating the regulation valve to the regulation valve memory opening Kⱼᵢ;
Step 6: After regulating the regulation valve, measuring the actual flow Q_{j'};
Step 7: according to the actual flow Q_{j'}, calculating actual flow accuracy R_{j'}, determining whether the actual flow Q_{j'} is in a stable state by the gas supply model, and calculating the continuous stability rate of the actual flow Q_{j'} in the range of the designed flow regulation accuracy Rⱼ.
Step 8: according to update conditions, determining whether updating Kⱼ and K for the gas supply model, if not, ending the regulation of the gas supply valve, or ending the regulation of the gas supply valve after updating.

During the smelting process of steel converter, the flow is regulated by gas supply model. Most of the existing gas supply models set flow according to the model, and automatically regulate the flow by the system regulation valve or flow regulating device. The regulation speed and accuracy of this method mainly depend on own characteristics of the system regulation valve or the flow regulating device, a large range regulation of related devices is needed during each flow regulation process; the regulation speed is slow, and the accuracy is low. The method of the present invention establishes a regulation valve memory openings set of different design flows under different gas supply branch pressures and main line pressures in the gas supply model, and according to the data in the regulation valve memory opening set, can quickly regulate the gas supply valve group to corresponding opening when performing corresponding flow regulation in the subsequent process. The flow regulation speed is ≤10s, the flow regulation accuracy range is ±1Nm³/h, and the flow stability coefficient is ≤0.02. Compared with the prior art, the flow regulation speed and the accuracy are improved.

Specifically, in the step 1, firstly collecting the memory openings K₁ᵢ of the gas supply model designed flow Q₁ under gas supply branch pressure P₁ᵢ and main line pressure P₀ᵢ, wherein, i= 1, 2, 3 ... n.

The memory opening K₁ᵢ is the regulation valve opening when t₁≥20%, wherein, t₁ is the continuous stability rate of the actual flow Q_{1'} in the range of the designed flow regulation accuracy R₁, wherein, t₁=T₁/T₀₁×100%; T₁ is the continuous stability time of the actual flow Q_{1'} in the range of the designed flow regulation accuracy; T₀₁ is the set gas supply time of the gas supply model designed flow Q₁.

Wherein, R₁=±(7.25-1.16ln(Q₁)), the actual flow regulation accuracy R_{1'}=|(Q₁-Q_{1'})/Q₁|, if the actual flow regulation accuracy R_{1'}≤ R₁, indicating that R_{1'} is in the range of the designed flow regulation accuracy R₁, and the actual flow Q_{1'} is in a stable state; if the actual flow regulation accuracy R_{1'} > R₁, indicating that R_{1'} is not in the range of the designed flow adjustment accuracy R₁, and the actual flow Q_{1'} is in a unstable state.

For example, the memory opening of the model designed flow Q₁ under the gas supply branch pressure P₁₁ and the main line pressure P₀₁ is K₁₁, the memory opening of the model designed flow Q₁ under the gas supply branch pressure P₁₂ and the main line pressure P₀₂ is K₁₂, the memory opening of the model designed flow Q₁ under the gas supply branch pressure P₁₃ and the main line pressure P₀₃ is K₁₃, the memory opening of the model designed flow Q₁ under the gas supply branch pressure P₁ᵢ and the main line pressure P₀ᵢ is K₁ᵢ, the memory opening of the model designed flow Q₁ under the gas supply branch pressure P₁ₙ and the main line pressure P₀ₙ is K₁ₙ, establishing the first flow memory opening set K₁ composed of the regulation valve memory openings K₁ᵢ (i=1, 2, 3...n) of the gas supply model designed flow Q₁ under different air supply branch pressures and main line pressures, wherein, K₁={K₁₁, K₁₂, ..., K₁₁, ..., K₁ₙ}.

Similarly, collecting the memory opening K₂ᵢ (i=1, 2, 3...n) of the gas supply model designed flow Q₁ under the gas supply branch pressure P₁ᵢ and the main line pressure P₀ᵢ, establishing the second flow memory opening set K₂ composed of the regulation valve memory openings K₂ᵢ (i=1, 2, 3...n) of the gas supply model designed flow Q₂ under different air supply branch pressures and main line pressures, wherein, K₂={K₂₁, K₂₂, ..., K₂ᵢ, ..., K₂ₙ}. Collecting the memory opening Kⱼᵢ (i=1, 2, 3 ... n; j =1, 2, 3 ... m) of the gas supply model designed flow Qⱼ under the gas supply branch pressure P₁ᵢ and the main line pressure P₀ᵢ, establishing the j-th flow memory opening set Kⱼ composed of the regulation valve memory openings Kⱼᵢ (i=1, 2, 3...n) of the gas supply model designed flow Qⱼ under different gas supply branch pressures and main line pressures, Kⱼ = {Kⱼ₁, Kⱼ₂, ..., Kⱼᵢ, ..., Kⱼₙ}.

Correspondingly, Kⱼᵢ is the regulation valve opening when tⱼ≥ 20%, wherein, tⱼ is the continuous stability rate of the actual flow Q_{j'} in the range of the designed flow regulation accuracy Rⱼ, tⱼ = Tⱼ/T₀ⱼ×100%; Tⱼ is the continuous stability time of Q_{j'} in the range of the designed flow regulation accuracy Rⱼ, and T₀ⱼ is the set gas supply time of the gas supply model designed flow Qⱼ.

Wherein, Rⱼ=±(7.25-1.16ln(Qⱼ)), the actual flow regulation accuracy R_{j'}=|(Qⱼ-Q_{j'})/Qⱼ|. If the actual flow regulation accuracy R_{j'}≤ Rⱼ, indicating that R_{j'} is in the range of the designed flow adjustment accuracy Rⱼ, and the actual flow Q_{j'} is in a stable state; if the actual flow regulation accuracy R_{j'} > Rⱼ, indicating that R_{j'} is not in the range of the designed flow adjustment accuracy Rⱼ, and the actual flow Q_{j'} is in a unstable state.

In the step 2, establishing a set K composed of the j-th flow memory opening set Kⱼ, that is, the regulation valve memory opening set for each designed flow in the gas supply model under different air supply branch pressures and main line pressures, wherein, K= {K₁, K₂, ..., Kⱼ, ..., Kₘ}.

Specifically, in the step 8, the update conditions include: the gas supply model determines whether the actual flow regulation accuracy R_{j'} is in the range of the designed flow regulation accuracy Rⱼ, and the continuous stability rate tⱼ of the actual flow in the range of the designed flow regulation accuracy Rⱼ is ≥20%.

If the actual flow regulation accuracy R_{j'} ≤ the designed flow regulation accuracy Rⱼ and the continuous stability rate tⱼ of the actual flow in the range of the designed flow regulation accuracy Rⱼ is ≥20%, the actual flow Q_{j'} is in a stable state, no need to update Kⱼ and K, and ending flow regulation of the gas supply valve.

If the actual flow regulation accuracy R_{j'} ≤ the designed flow regulation accuracy Rⱼ, and the continuous stability rate tⱼ of the actual flow in the range of the designed flow regulation accuracy Rⱼ is < 20%, the actual flow Q_{j'} is in an unstable state, the gas supply model automatically controls the regulation of the regulation valve opening to make the continuous stability rate tⱼ of the actual flow ≥20% in the range of the designed flow regulation accuracy Rⱼ, recording the regulation valve opening, updating Kⱼ and K, and ending flow regulation of the gas supply valve.

If the actual flow regulation accuracy R_{j'} > the designed flow regulation accuracy Rⱼ, and the continuous stability rate tⱼ of the actual flow in the range of the designed flow regulation accuracy Rⱼ is <20%, the actual flow Q_{j'} is in an unstable state, the gas supply model automatically controls the regulation of the regulation valve opening to make the continuous stability rate tⱼ of the actual flow ≥20% in the range of the designed flow regulation accuracy Rⱼ, recording the regulation valve opening, updating Kⱼ and K, and ending flow regulation of the gas supply valve.

The method of the present invention establishes a regulation valve memory opening set of different designed flows under different gas supply branch pressures and main line pressures in the gas supply model, according to the data in the regulation valve memory openings set, can quickly regulate the gas supply valve group to corresponding opening when performing corresponding flow regulation in the subsequent process; and has improved regulation speed and accuracy. The method of the present invention can update the regulation valve memory opening set according to the regulation result, and ensuring the accuracy of the regulation of the gas supply valve group for the gas supply model.

### Embodiment

The embodiment regulates the flow of a gas supply valve group, including the following steps:
Step 1: collecting the regulation valve memory openings of the gas supply model designed flow Qⱼ at different gas supply branch pressures and main line pressures, and establishing the j-th flow memory opening set Kⱼ composed of the regulation valve memory openings of the gas supply model designed flow Qⱼ at different air supply branch pressures and main line pressures;
   wherein, Qⱼ respectively is Q₁=50Nm³/h, Q₂=100Nm³/h, Q₃=150Nm³/h;
   The regulation valve memory opening K₁₁ of Q₁(50Nm³/h) under gas supply branch pressure 0.3MPa and main line pressure 1.5MPa is 30%; the regulation valve memory opening K₁₂ of Q₁ under gas supply branch pressure 0.4MPa and main line pressure 1.5MPa is 31%; the regulation valve memory opening K₁₃ of Q₁ under gas supply branch pressure 0.5MPa and main line pressure 1.5MPa is 32%; the regulation valve memory opening K₁₄ of Q₁ under gas supply branch pressure 0.6MPa and main line pressure 1.5MPa is 33%; the regulation valve memory opening K₁₅ of Q₁ under gas supply branch pressure 0.7MPa and main line pressure 1.5MPa is 34%; the regulation valve memory opening K₁₆ of Q₁ under gas supply branch pressure 0.8MPa and main line pressure 1.5MPa is 35%; the regulation valve memory openings of the gas supply model designed flow 50Nm³/h under different air supply branch pressures and main line pressures make up the first flow memory opening set K₁, wherein, K₁={30%, 31%, 32%, 33%, 34%, 35%};
   the regulation valve memory opening K₂₁ of Q₂(100Nm³/h) under gas supply branch pressure 0.6MPa and main line pressure 1.5MPa is 60%; the regulation valve memory opening K₂₂ of Q₂ under gas supply branch pressure 0.7MPa and main line pressure 1.5MPa is 61%; the regulation valve memory opening K₂₃ of Q₂ under gas supply branch pressure 0.8MPa and main line pressure 1.5MPa is 62%; the regulation valve memory opening K₂₄ of Q₂ under gas supply branch pressure 0.9MPa and main line pressure 1.5MPa is 63%; the regulation valve memory opening K₂₅ of Q₂ under gas supply branch pressure 1.0MPa and main line pressure 1.5MPa is 64%; the regulation valve memory opening K₂₆ of Q₂ under gas supply branch pressure 1.1MPa and main line pressure 1.5MPa is 65%; the regulation valve memory openings of the gas supply model designed flow 100Nm³/h under different air supply branch pressures and main line pressures make up the second flow memory opening set K₂, wherein, K₂={60%, 61%, 62%, 63%, 64%, 65%};
   the regulation valve memory opening K₃₁ of Q₃(150Nm³/h) under gas supply branch pressure 0.8MPa and main line pressure 1.5MPa is 90%; the regulation valve memory opening K₃₂ of Q₃ under gas supply branch pressure 0.9MPa and main line pressure 1.5MPa is 91%; the regulation valve memory opening K₃₃ of Q₃ under gas supply branch pressure 1.0MPa and main line pressure 1.5MPa is 92%; the regulation valve memory opening K₃₄ of Q₃ under gas supply branch pressure 1.1MPa and main line pressure 1.5MPa is 93%; the regulation valve memory opening K₃₅ of Q₃ under gas supply branch pressure 1.2MPa and main line pressure 1.5MPa is 94%; the regulation valve memory opening K₃₆ of Q₃ under gas supply branch pressure 1.3MPa and main line pressure 1.5MPa is 95%; the regulation valve memory openings of the gas supply model designed flow 150Nm³/h under different air supply branch pressures and main line pressures make up the first flow memory opening set K₃, wherein, K₃={90%, 91%, 92%, 93%, 94%, 95%};
   calculating the regulation accuracy R₁ corresponding to the gas supply model designed flow Q₁, wherein, R₁ = (Q₁-Q_{1'})/Q₁ = ±(7.25-1.16ln(Q₁))=2.71; similarly, R₂ = 1.90, R₃=1.44;
Step 2: establishing the set K composed of the regulation valve memory opening set Kⱼ;
   $K = \left\{{K}_{1}, {K}_{2}, {K}_{3}\right\} ;$
Step 3: when the gas supply model performs switch between different designed flows, firstly, according to the gas supply model designed flow 50Nm³/h to be switched, selecting the first flow memory opening set K₁ corresponding to 50Nm³/h in the set K;
Step 4: according to the corresponding gas supply branch pressure P₁₁(0.3MPa) and the main line pressure P₀₁(1.5MPa), determining the regulation valve memory opening 30% of the gas supply model designed flow Q₁(50Nm³/h) under the corresponding gas supply branch pressure P₁₁(0.3MPa) and the main line pressure P₀₁(1.5MPa);
Step 5: regulating the regulation valve to the memory opening 30%;
Step 6: after regulating the regulation valve, measuring the actual flow Q_{1'}, wherein, Q_{1'}=49Nm³/h;
Step 7: according to the actual flow Q_{1'}{49Nm³/h), calculating corresponding accuracy R_{1'}=0.02, meeting R_{1'}≤ R₁; at the same time, the set gas supply time T₀₁ is 30s of the gas supply model designed flow 50Nm³/h(Q₁), the 49Nm³/h(Q₁) continuous stability time T₁=10s in the range of the regulation accuracy R₁, the continuous stable time t₁ = T₁/T₀₁×100% = 33.33%, meeting t₁≥20%, the actual flow Q_{1'}(49Nm³/ h) is in a stable state, no need to adjust the regulation valve memory opening and to update K₁ and K, ending the flow regulation of the gas supply valve; the regulation time is 10s, the regulation accuracy is -1Nm³/h, and the flow stability coefficient is 0.02, which is the ratio of the difference between the actual flow and the designed flow to the designed flow.

Similarly, according to the same steps, regulating flow for Q₁(50Nm³/h) under the gas supply branch pressure 0.8MPa and the main line pressure 1.5MPa, and measuring the actual flow Q_{1'}, wherein, Q_{1'} = 51Nm³/h; according to the actual flow Q_{1'}(51Nm³/h), calculating the corresponding accuracy R_{1'} = 0.02, meeting R_{1'}≤R₁, at the same time, the set gas supply time T₀₁ of the gas supply model designed flow Q₁(50Nm³/h) is 30s, the Q₁'(51Nm³/h) continuous stability time T₁=12s in the range of the regulation accuracy R₁, the continuous stable time t₁ = T₁/T₀₁×100% = 40%, and meeting t₁≥20%, the actual flow Q_{1'}(51Nm³/ h) is in a stable state, no need to adjust the regulation valve memory opening and to update K₁ and K, ending the flow regulation of the gas supply valve; the regulation time is 8s, the regulation accuracy is 1Nm³/h, and the flow stability coefficient is 0.02.

Similarly, according to the same steps, regulation flow for Q₂(100Nm³/h) under the gas supply branch pressure 0.6MPa and the main line pressure 1.5MPa, and measuring the actual flow Q_{2'}, wherein, Q_{2'} = 99Nm³/h; according to the actual flow Q_{2'}(99Nm³/h), calculating the corresponding accuracy R_{2'} = 0.02, meetingR_{2'}≤ R₂, at the same time, the set gas supply time T₀₂ of the gas supply model designed flow Q₂(100Nm³/h) is 30s, the Q_{2'}(99Nm³/h) continuous stability time T₂=8s in the range of the regulation accuracy R_{2'} the continuous stable time t₂ = T₂/T₀₂×100% = 26.67%, and meeting t₂≥20%, the actual flow Q_{2'}(99Nm³/ h) is in a stable state, no need to adjust the regulation valve memory opening and to update K₂ and K, ending the flow regulation of the gas supply valve; the regulation time is 10s, the regulation accuracy is -1Nm³/h, and the flow stability coefficient is 0.01.

Similarly, according to the same steps, regulating flow for Q₂(100Nm³/h) under the gas supply branch pressure 1.1MPa and the main line pressure 1.5MPa, and measuring the actual flow Q_{2'}, wherein, Q_{2'} = 101Nm³/h; according to the actual flow Q_{2'}(101Nm³/h), calculating the corresponding accuracy R_{2'}=0.02, meeting R_{2'}≤ R_{2'} at the same time, the set gas supply time T₀₂ of the gas supply model designed flow Q₂(100Nm³/h) is 30s, the Q_{2'}(101Nm³/h) continuous stability time T₂=10s within the range of the regulation accuracy R_{2'} the continuous stable time t₂ = T₂/T₀₂×100% = 33.33%, and meeting t₂≥20%, the actual flow Q_{2'}(101Nm³/h) is in a stable state, no need to adjust the regulation valve memory opening and to update K₂ and K, ending the flow regulation of the gas supply valve; the regulation time is 10s, the regulation accuracy is 1Nm³/h, and the flow stability coefficient is 0.01.

Similarly, according to the same steps, regulating flow for Q₃(150Nm³/h) under the gas supply branch pressure 0.8MPa and the main line pressure 1.5MPa, and measuring the actual flow Q_{3'}, wherein, Q_{3'} = 149Nm³/h; according to the actual flow Q_{3'}(149Nm ³/h), calculating the corresponding accuracy R_{3'} = 0.02, meeting R_{3'}≤R₃, at the same time, the set gas supply time T₀₃ of the gas supply model designed flow Q₃(150Nm³/h) is 30s, the Q_{3'}(149Nm³/h) continuous stability time T₃=11s within the range of the adjustment accuracy R₃, the continuous stable time t₃ = T₃/T₀₃×100% = 36.67%, and meeting t₃≥20%, the actual flow Q_{3'}(149Nm³/h) is in a stable state, no need to adjust the regulation valve memory opening and to update K₃ and K, ending the flow regulation of the gas supply valve; the regulation time is 6s, the regulation accuracy is -1Nm³/h, and the flow stability coefficient is 0.0067.

Similarly, according to the same steps, regulating flow for Q₃(150Nm³/h) under the gas supply branch pressure 1.2MPa and the main line pressure 1.5MPa, and measuring the actual flow Q_{3'}, wherein, Q_{3'} = 151Nm³/h; according to the actual flow Q_{3'}(151Nm³/h), calculating the corresponding accuracy R_{3'} = 0.02, meeting R_{3'}≤R₃, at the same time, the set gas supply time T₀₃ of the gas supply model designed flow Q₃(150Nm³/h) is 30s, the Q_{3'}(151Nm³/h) continuous stability time T₃=12s within the range of the adjustment accuracy R₃, the continuous stable time t₃ = T₃/T₀₃×100% = 40%, and meeting t₃≥20%, the actual flow Q_{3'}(151Nm³/h) is in a stable state, no need to adjust the regulation valve memory opening and to update K₃ and K, ending the flow regulation of the gas supply valve; the regulation time is 9s, the regulation accuracy is 1Nm³/h, and the flow stability coefficient is 0.0067.

### Comparative embodiment

By using the existing gas supply valve group regulation method, the comparative embodiment regulates flow of the supply valve group, which is the same to that in the embodiment, and includes the following steps:

According to the designed flow set by the gas supply model, regulating the regulation valve under certain gas supply branch pressure and main line pressure, and detecting whether the flow of the regulation valve is adjusted to the specified designed flow by flow meter; adjusting the regulation valve opening according to the flow regulation gradient, the flow regulation gradient is 5%-10%, and the regulation accuracy range is ±3Nm³/h.

Wherein, the designed flow Qⱼ respectively is Q₁=50Nm³/h, Q₂=100Nm³/h, Q₃ = 150Nm³/h.

Regulating flow under the gas supply branch pressure 0.3MPa and the main pressure 1.5MPa when the designed flow is Q1(50Nm³/h), the flow of the regulation valve is 45Nm³/h detected by the flow meter, which is not in the required accuracy range; regulating the regulation valve according to the regulation gradient, wherein, the regulation gradient is 5%, and the flow of the regulation valve is 47.25Nm³/h detected by the flow meter, which is in the required accuracy range; then ending the flow regulation. The regulation time is 40s, the regulation accuracy is -2.75Nm³/h, and the flow stability coefficient is 0.055.

Similarly, according to the same steps, regulating flow under the gas supply branch pressure 0.8MPa and the main pressure 1.5MPa when the designed flow is Q₁(50Nm³/h), the flow of the regulation valve is 44Nm³/h detected by the flow meter, which is not in the required accuracy range; regulating the regulation valve according to the regulation gradient, wherein, the regulation gradient is 5%, and the flow of the regulation valve is 46.2Nm³/h detected by the flow meter, which is not in the required accuracy range, further regulating the regulation valve according to the regulation gradient, wherein, the regulation gradient is 5%, and the flow of the regulation valve is 48.51Nm³/h detected by the flow meter; then ending the flow regulation. The regulation time is 45s, the regulation accuracy is -1.49Nm³/h, and the flow stability coefficient is 0.029.

Similarly, according to the same steps, regulating flow under the gas supply branch pressure 0.6MPa and the main pressure 1.5MPa when the designed flow is Q₂(100Nm³/h), the flow of the regulation valve is 92Nm³/h detected by the flow meter, which is not in the required accuracy range; regulating the regulation valve according to the regulation gradient, wherein, the regulation gradient is 5%, and the flow of the regulation valve is 97.52Nm³/h detected by the flow meter, which is in the required accuracy range; then ending the flow regulation. The regulation time is 35s, the regulation accuracy is -2.48Nm³/h, and the flow stability coefficient is 0.025.

Similarly, according to the same steps, regulating flow under the gas supply branch pressure 1.1MPa and the main pressure 1.5MPa when the designed flow is Q₂(100Nm³/h), the flow of the regulation valve is 95Nm³/h detected by the flow meter, which is not in the required accuracy range; regulating the regulation valve according to the regulation gradient, wherein, the regulation gradient is 8%, and the flow of the regulation valve is 102.6Nm³/h detected by the flow meter, which is in the required accuracy range; then ending the flow regulation. The regulation time is 36s, the regulation accuracy is 2.6Nm³/h, and the flow stability coefficient is 0.026.

Similarly, according to the same steps, regulating flow under the gas supply branch pressure 0.8MPa and the main pressure 1.5MPa when the designed flow is Q₃(150Nm³/h), the flow of the regulation valve is 144Nm³/h detected by the flow meter, which is not in the required accuracy range; regulating the regulation valve according to the regulation gradient, wherein, the regulation gradient is 6%, and the flow of the regulation valve is 152.64Nm³/h detected by the flow meter, which is in the required accuracy range; then ending the flow regulation. The regulation time is 40s, the regulation accuracy is 2.64Nm³/h, and the flow stability coefficient is 0.018.

Similarly, according to the same steps, regulating flow under the gas supply branch pressure 1.2MPa and the main pressure of 1.5MPa when the designed flow is Q₃(150Nm³/h), the flow of the regulation valve is 140Nm³/h detected by the flow meter, which is not in the required accuracy range; regulating the regulation valve according to the regulation gradient, wherein, the regulation gradient is 6%, and the flow of the regulation valve is 148.4Nm³/h detected by the flow meter, which is in the required accuracy range; then ending the flow regulation. The regulation time is 38s, the regulation accuracy is -1.6Nm³/h, and the flow stability coefficient is 0.011.

It can be seen from the embodiment and the comparative embodiment that the method of the present invention for regulating the flow of the gas supply valve group makes the flow regulation time ≤10s, the flow regulation accuracy ±1Nm³/h, and the flow stability coefficient ≤0.02; the existing process for regulating the flow of the gas supply valve group makes the flow regulation time 30-50s, the flow adjustment accuracy ±3Nm³/h, and the flow stability coefficient ≤0.055; compared with the existing method, the method of the present invention can realize rapid and stable regulation and control of the flow of the gas supply valve group.

## Claims

1. A flow regulation controlling method for gas supply valve group, **characterized in that** it comprises the following steps:
Step 1: collecting regulation valve memory openings of a gas supply model designed flow Qⱼ under different gas supply branch pressures and main line pressures, establishing a j-th flow memory opening set Kⱼ composed of the regulation valve memory openings of the gas supply model designed flow Qⱼ under different gas supply branch pressures and main line pressures;
Step 2: establishing a set K composed of the j-th flow memory opening set Kⱼ;
Step 3: when the gas supply model performs switch between different designed flows, firstly according to the gas supply model designed flow Qⱼ to be switched, selecting the j-th flow memory opening set Kⱼ corresponding to Qⱼ in the set K;
Step 4: according to a corresponding gas supply branch pressure P₁ᵢ and a main line pressure P₀ᵢ, determining the regulation valve memory opening Kⱼᵢ of the gas supply model designed flow Qⱼ under the corresponding gas supply branch pressure P₁ᵢ and the main line pressure P₀ᵢ;
Step 5: regulating the regulation valve to the regulation valve memory opening Kⱼᵢ;
Step 6: after regulating the regulation valve, measuring the actual flow Q_{j'};
Step 7: according to the actual flow Q_{j'}, calculating actual flow accuracy R_{j'}, determining whether the actual flow Q_{j'} is in a stable state by the gas supply model, and calculating the continuous stability rate of the actual flow Q_{j'} in the range of a designed flow regulation accuracy Rⱼ;
Step 8: according to update conditions, the gas supply model determines whether updating Kⱼ and K, if not, ending the flow regulation of the gas supply valve, or ending the flow regulation of the gas supply valve after updating.

2. The flow regulation controlling method for gas supply valve group according to claim 1, wherein the step 1 comprises:
collecting the regulation valve memory openings Kⱼᵢ of the gas supply model designed flow Qⱼ under gas supply branch pressures P₁ᵢ and main line pressures P₀ᵢ, wherein, i= 1, 2, 3 ... n, j= 1, 2, 3 ... m;
establishing the j-th flow memory opening set Kⱼ composed of the regulation valve memory openings Kⱼᵢ of the gas supply model designed flow Qⱼ under gas supply branch pressures P₁ᵢ and main line pressures P₀ᵢ, wherein, Kⱼ = {Kⱼ₁, Kⱼ₂, ..., Kⱼᵢ, ..., Kⱼₙ}, i = 1, 2, 3...n, j=1, 2, 3...m.

3. The flow regulation controlling method for gas supply valve group according to claim 1 or claim 2, wherein, the regulation valve memory opening Kⱼᵢ of the gas supply model designed flow Qⱼ under gas supply branch pressures P₁ᵢ and main line pressures P₀ᵢ is the regulation valve opening when tⱼ≥20%, and tⱼ is the continuous stability rate of the actual flow in the range of the designed regulation accuracy.

4. The flow regulation controlling method for gas supply valve group according to claim 3, wherein tⱼ=Tⱼ/T₀ⱼ× 100%, Tⱼ is a continuous stability time (s) of the actual flow in the range of the designed regulation accuracy, and T₀ⱼ is a set gas supply time (s) of the gas supply model designed flow Qⱼ.

5. The flow regulation controlling method for gas supply valve group according to any one of claims 1-4, wherein the designed flow regulation accuracy Rⱼ=±(7.25-1.161n(Qⱼ)), Rⱼ is the designed flow regulation accuracy, Qⱼ(Nm³/h) is the gas supply model designed flow.

6. The flow regulation controlling method for gas supply valve group according to any one of claims 1-5, wherein, in the step 7, determining whether the actual flow Q_{j'} is in a stable state by the gas supply model comprises:
if the actual flow regulation accuracy R_{j'} ≤ t0he designed flow regulation accuracy Rⱼ, the actual flow Q_{j'} is in a stable state;
if the actual flow regulation accuracy R_{j'} > the designed flow regulation accuracy Rⱼ, the actual flow Q_{j'} is in an unstable state.

7. The flow regulation controlling method for gas supply valve group according to claim 6, wherein the actual flow regulation accuracy R_{j'}=|(Qⱼ-Q_{j'})/Qⱼ).

8. The flow regulation controlling method for gas supply valve group according to any one of claims 1-7, wherein the update conditions comprise: the gas supply model determines whether the actual flow regulation accuracy R_{j'} is in the range of the designed flow regulation accuracy Rⱼ, and the continuous stability rate tⱼ of the actual flow in the range of the designed flow regulation accuracy Rⱼ is ≥20%;
if the actual flow regulation accuracy R_{j'}≤ the designed flow regulation accuracy Rⱼ and the continuous stability rate tⱼ of the actual flow in the range of the designed flow regulation accuracy Rⱼ is ≥20%, the actual flow Q_{j'} is in a stable state, no need to update Kⱼ and K, and ending flow regulation of the gas supply valve.

9. The flow regulation controlling method for gas supply valve group according to claim 8, wherein, the update conditions further comprise: the actual flow regulation accuracy R_{j'}< the designed flow regulation accuracy Rⱼ, and the continuous stability rate tⱼ of the actual flow in the range of the designed flow regulation accuracy Rⱼ is <20%, the actual flow Q_{j'} is in an unstable state, and the gas supply model automatically controls the regulation of the regulation valve opening to make the continuous stability rate tⱼ of the actual flow ≥20% in the range of the designed flow regulation accuracy Rⱼ, recording the regulation valve opening, updating Kⱼ and K, and ending the flow regulation of the gas supply valve.

10. The flow regulation controlling method for gas supply valve group according to claim 8 or claim 9, wherein, the update conditions also comprise: the actual flow regulation accuracy R_{j'} > the designed flow regulation accuracy Rⱼ, and the continuous stability rate tⱼ of the actual flow in the range of the designed flow regulation accuracy Rⱼ is <20%, the actual flow Q_{j'} is in an unstable state, and the gas supply model automatically controls the regulation of the regulation valve opening to make the continuous stability rate tⱼ of the actual flow ≥20% in the designed flow regulation accuracy Rⱼ, recording the regulation valve opening, updating Kⱼ and K, and ending the flow regulation of the gas supply valve.

## Patentansprüche

1. Verfahren zur Steuerung einer Durchflussmenge für einer Gasversorgungsventilgrupp e, **dadurch gekennzeichnet, dass** das Verfahren die folgenden Schritte umfasst:
Schritt 1: Einsammeln von Regelventil-Speicher-Öffnungen einer Gasversorgungsmo dell-Auslegung-Durchflussmenge Qⱼ unter unterschiedlichen Gasversorgungszweigdrücken und Hauptleitungsdrücken, und Einrichten eines j^{-ten} Fluss-Speicher-Öffnungssets Kⱼ, das aus den Regelventil-Speicher-Öffnungen der Gasversorgungsmodell-Auslegung-Durchflu ssmenge Qⱼ unter unterschiedlichen Gasversorgungszweigdrücken und Hauptleitungsdrüc ken besteht;
Schritt 2: Einrichten eines Sets K, das aus dem j^{-ten} Fluss-Speicher-Öffnungsset Kⱼ b esteht;
Schritt 3: Auswählen des j^{-ten} Fluss-Speicher-Öffnungssets Kⱼ, das Qⱼ in dem Set K entspricht, zunächst gemäß der sich aufgeschaltet werdenden Gasversorgungsmodell-Ausle gung-Durchflussmenge Qⱼ, wenn das Gasversorgungsmodell zwischen verschiedenen Ausl egung-Durchflussmengen wechselt;
Schritt 4: Ermitteln der Regelventil-Speicher-Öffnung Kⱼᵢ der Gasversorgungsmodell-Auslegung-Durchflussmenge Qⱼ unter einem entsprechenden Gasversorgungszweigdruck P ₁ᵢ und einem Hauptleitungsdruck P₀ᵢ, gemäß dem entsprechenden Gasversorgungszweigdr uck P₁ᵢ und dem Hauptleitungsdruck P₀ᵢ;
Schritt 5: Regulieren des Regelventil zur Regelventil-Speicher-Öffnung Kⱼᵢ;
Schritt 6: Messen der tatsächliche Durchflussmenge Q_{j'}, nach der Regulierung des R egelventil;
Schritt 7: Ermitteln von tatsächlicher Durchflussmenge-Regulierung-Genauigkeit R_{j'}, Entscheiden mit Hilfe vom Gasversorgungsmodell, ob die tatsächliche Durchflussmenge Q_{j'} in einem stabilen Zustand ist, und Ermitteln der kontinuierlichen Stabilitätsrate der tat sächlichen Durchflussmenge Q_{j'} im Bereich einer Auslegung-Durchflussmenge-Regulierun g-Genauigkeit Rⱼ, gemäß der tatsächlichen Durchflussmenge Q_{j'}; und
Schritt 8: Entscheiden mit Hilfe vom Gasversorgungsmodell, ob Kⱼ und K aktualisie rt werden, gemäß Aktualisierungsbedingungen, wenn nicht, Enden der Durchflussmenge-Regulierung des Gasversorgungsventils, sonst, Enden der Durchflussmenge-Regulierung d es Gasversorgungsventils nach der Aktualisierung.

2. Verfahren zur Steuerung einer Durchflussmenge für einer Gasversorgungsventilgrupp e, nach der Anspruch 1, **dadurch gekennzeichnet, dass** der Schritt 1 die folgenden Unters chritte umfasst:
Einsammeln der Regelventil-Speicher-Öffnungen Kⱼᵢ der Gasversorgungsmodell-Ausle gung-Durchflussmenge Qⱼ unter Gasversorgungszweigdrücken P₁ᵢ und Hauptleitungsdrück en P₀ᵢ, wo i= 1, 2, 3 ... n, j= 1, 2, 3 ... m; und
Einrichten des j^{-ten} Fluss-Speicher-Öffnungssets Kj, das aus den Regelventil-Speicher -Öffnungen Kⱼᵢ der Gasversorgungsmodell-Auslegung-Durchflussmenge Qⱼ unter Gasverso rgungszweigdrücken P₁ᵢ und Hauptleitungsdrücken P₀ᵢ besteht, wo Kⱼ = {Kⱼ₁, Kⱼ₂, ..., Kⱼᵢ, ..., Kⱼₙ}, i = 1, 2, 3...n, j = 1, 2, 3...m.

3. Verfahren zur Steuerung einer Durchflussmenge für einer Gasversorgungsventilgrupp e, nach der Anspruch 1 oder 2, **dadurch gekennzeichnet, dass** die Regelventil-Speicher-Ö ffnung Kⱼᵢ der Gasversorgungsmodell-Auslegung-Durchflussmenge Qⱼ unter Gasversorgun gszweigdrücken P₁ᵢ und Hauptleitungsdrücken P₀ᵢ die Regelventil-Öffnung ist, wenn tⱼ≥2 0%, und tⱼ die kontinuierlichen Stabilitätsrate der tatsächlichen Durchflussmenge im Berei ch der Auslegung-Durchflussmenge-Regulierung-Genauigkeit ist.

4. Verfahren zur Steuerung einer Durchflussmenge für einer Gasversorgungsventilgrupp e, nach der Anspruch 3, **dadurch gekennzeichnet, dass** tⱼ=Tⱼ/T₀ⱼ×100%, wo Tⱼ eine kontin uierliche Stabilitätszeit (s) der tatsächlichen Durchflussmenge im Bereich der Auslegung-Durchflussmenge-Regulierung-Genauigkeit ist, und T₀ⱼ eine bestimmte Gasversorgungszeit (s) der Gasversorgungsmodell-Auslegung-Durchflussmenge Qⱼ ist.

5. Verfahren zur Steuerung einer Durchflussmenge für einer Gasversorgungsventilgrupp e, nach einem der Ansprüche 1 bis 4, **dadurch gekennzeichnet, dass** die Auslegung-Durc hflussmenge-Regulierung-Genauigkeit Rⱼ=±(7.25-1.16ln(Qⱼ)), wo Rⱼ die Auslegung-Durchf lussmenge-Regulierung-Genauigkeit ist, und Qⱼ(Nm³/h) die Gasversorgungsmodell-Ausleg ung-Durchflussmenge ist.

6. Verfahren zur Steuerung einer Durchflussmenge für einer Gasversorgungsventilgrupp e, nach einem der Ansprüche 1 bis 5, **dadurch gekennzeichnet, dass** das Entscheiden mit Hilfe vom Gasversorgungsmodell, ob die tatsächliche Durchflussmenge Q_{j'} in einem stabi len Zustand ist, im Schritt 7, das folgende Ergebnis umfasst:
falls die tatsächlichen Durchflussmenge-Regulierung-Genauigkeit R_{j'} ≤ die Auslegung -Durchflussmenge-Regulierung-Genauigkeit Rⱼ, die tatsächliche Durchflussmenge Q_{j'} ist in einem stabilen Zustand;
falls die tatsächlichen Durchflussmenge-Regulierung-Genauigkeit R_{j'} > die Auslegun g-Durchflussmenge-Regulierung-Genauigkeit Rⱼ, die tatsächliche Durchflussmenge Q_{j'} ist i n einem instabilen Zustand.

7. Verfahren zur Steuerung einer Durchflussmenge für einer Gasversorgungsventilgrupp e, nach der Anspruch 6, **dadurch gekennzeichnet, dass** die tatsächlichen Durchflussmenge -Regulierung-Genauigkeit R_{j'}=|(Qⱼ-Q_{j'})/Qⱼ|.

8. Verfahren zur Steuerung einer Durchflussmenge für einer Gasversorgungsventilgrupp e, nach einem der Ansprüche 1 bis 7, **dadurch gekennzeichnet, dass** die Aktualisierungsb edingungen das folgende Ergebnis umfassen:
Entscheiden mit Hilfe vom Gasversorgungsmodell, ob die tatsächlichen Durchflussm enge-Regulierung-Genauigkeit R_{j'} im Bereich der Auslegung-Durchflussmenge-Regulierun g-Genauigkeit Rⱼ ist, und ob die kontinuierlichen Stabilitätsrate der tatsächlichen Durchfl ussmenge im Bereich der Auslegung-Durchflussmenge-Regulierung-Genauigkeit Rⱼ ≥20% ist;
falls die tatsächlichen Durchflussmenge-Regulierung-Genauigkeit R_{j'} ≤ die Auslegun g-Durchflussmenge-Regulierung-Genauigkeit Rⱼ, und die kontinuierlichen Stabilitätsrate tⱼ der tatsächlichen Durchflussmenge im Bereich der Auslegung-Durchflussmenge-Regulieru ng-Genauigkeit Rⱼ ≥20%, die tatsächliche Durchflussmenge Q_{j'} ist in einem stabilen Zust and, kein Bedarf, Kⱼ und K zu aktualisieren, und Enden der Durchflussmenge-Regulierun g des Gasversorgungsventils.

9. Verfahren zur Steuerung einer Durchflussmenge für einer Gasversorgungsventilgrupp e, nach der Anspruch 8, **dadurch gekennzeichnet, dass** die Aktualisierungsbedingungen da s folgende Ergebnis umfassen:
falls die tatsächlichen Durchflussmenge-Regulierung-Genauigkeit R_{j'} ≤ die Auslegun g-Durchflussmenge-Regulierung-Genauigkeit Rⱼ, und die kontinuierlichen Stabilitätsrate tⱼ der tatsächlichen Durchflussmenge im Bereich der Auslegung-Durchflussmenge-Regulieru ng-Genauigkeit Rⱼ <20%, die tatsächliche Durchflussmenge Q_{j'} ist in einem instabilen Zu stand, und die Regelung der Regelventil-Öffnung ist unter der automatischen Kontrolle d es Gasversorgungsmodell, um die kontinuierlichen Stabilitätsrate tⱼ der tatsächlichen Durc hflussmenge im Bereich der Auslegung-Durchflussmenge-Regulierung-Genauigkeit Rⱼ ≥2 0% zu machen, Aufzeichnen der Regelventil-Öffnung, Aktualisieren von Kⱼ und K, und Enden der Durchflussmenge-Regulierung des Gasversorgungsventils.

10. Verfahren zur Steuerung einer Durchflussmenge für einer Gasversorgungsventilgrupp e, nach der Anspruch 8 oder 9, **dadurch gekennzeichnet, dass** die Aktualisierungsbedingu ngen das folgende Ergebnis umfassen:
falls die tatsächlichen Durchflussmenge-Regulierung-Genauigkeit R_{j'} > die Auslegu ng-Durchflussmenge-Regulierung-Genauigkeit Rⱼ, und die kontinuierlichen Stabilitätsrate tⱼ der tatsächlichen Durchflussmenge im Bereich der Auslegung-Durchflussmenge-Regul ierung-Genauigkeit Rⱼ <20%, die tatsächliche Durchflussmenge Q_{j'} ist in einem instabil en Zustand, und die Regelung der Regelventil-Öffnung ist unter der automatischen Ko ntrolle des Gasversorgungsmodell, um die kontinuierlichen Stabilitätsrate tⱼ der tatsächli chen Durchflussmenge im Bereich der Auslegung-Durchflussmenge-Regulierung-Genauig keit Rⱼ ≥20% zu machen, Aufzeichnen der Regelventil-Öffnung, Aktualisieren von Kⱼ und K, und Enden der Durchflussmenge-Regulierung des Gasversorgungsventils.

## Revendications

1. Procédé de contrôle de régulation-à-débit pour un groupe de vannes d'alimentation en gaz, **caractérisé en ce que** le procédé comprend les étapes suivantes :
Etape 1 : collecter des ouvertures mémoire de vanne régulatrice d'un débit de conception de modèle d'alimentation en gaz Qⱼ sous différentes pressions de branche d'alimentation en gaz et des pressions de ligne principale, et établir un j^{-ème} ensemble d'ouvertures mémoire de débit Kⱼ composé des ouvertures mémoire de vanne régulatrice du débit de conception de modèle d'alimentation en gaz Qⱼ sous différentes pressions de branche d'alimentation en gaz et des pressions de ligne principale ;
Etape 2 : établir un ensemble K composé du j^{-ème} ensemble d'ouvertures mémoire de débit Kⱼ ;
Etape 3 : sélectionner le j^{-ème} ensemble d'ouvertures mémoire de débit Kⱼ correspondant à Qⱼ dans l'ensemble K, tout d'abord, selon le débit de conception de modèle d'alimentation en gaz Qⱼ qui se changera, lorsque le modèle d'alimentation en gaz effectue un changement entre différents débits de conception,
Etape 4 : déterminer l'ouverture mémoire de vanne régulatrice Kⱼᵢ du débit de conception de modèle d'alimentation en gaz Qⱼ sous une pression de branche d'alimentation en gaz correspondante P₁ᵢ et une pression de ligne principale P₀ᵢ, selon la pression de branche d'alimentation en gaz correspondante P₁ᵢ et la pression de ligne principale P₀ᵢ ;
Etape 5 : régler la vanne régulatrice à l'ouverture mémoire de vanne régulatrice Kⱼᵢ ;
Etape 6 : après avoir réglé la vanne régulatrice, mesurer le débit réel Q_{j'} ;
Etape 7 : calculer une précision de débit réel R_{j'} selon le débit réel Q_{j'}, déterminer si le débit réel Q_{j'} est dans un état stable au moyen du modèle d'alimentation en gaz, et calculer le taux de stabilité continue du débit réel Q_{j'} dans la portée d'une précision de régulation-à-débit de conception Rⱼ ; et
Etape 8 : déterminer au moyen du modèle d'alimentation en gaz s'il faut mettre à jour Kⱼ et K selon des conditions de mise à jour ; si ce n'est pas le cas, finir le débit-régulation de la vanne d'alimentation en gaz, sinon finir le débit-régulation de la vanne d'alimentation en gaz après mise à jour.

2. Procédé de contrôle de régulation-à-débit pour un groupe de vannes d'alimentation en gaz, selon la revendication 1, **caractérisé en ce que** l'étape 1 comprend :
collecter les ouvertures mémoire de vanne régulatrice Kⱼᵢ du débit de conception de modèle d'alimentation en gaz Qⱼ sous des pressions de branche d'alimentation en gaz P₁ᵢ et des pressions de ligne principale P₀ᵢ, où i= 1, 2, 3 ... n, j= 1, 2, 3 ... m ; et
établir le j^{-ème} ensemble d'ouvertures mémoire de débit Kⱼ composé des ouvertures mémoire de vanne régulatrice Kⱼᵢ du débit de conception de modèle d'alimentation en gaz Qⱼ sous des pressions de branche d'alimentation en gaz P₁ᵢ et des pressions de ligne principale P₀ᵢ ,où Kⱼ={Kⱼ₁, Kⱼ₂, ..., Kⱼᵢ, ..., Kⱼₙ}, i=1, 2, 3...n, j=1, 2, 3...m.

3. Procédé de contrôle de régulation-à-débit pour un groupe de vannes d'alimentation en gaz, selon la revendication 1 ou 2, **caractérisé en ce que** l'ouverture mémoire de vanne régulatrice Kⱼᵢ du débit de conception de modèle d'alimentation en gaz Qⱼ sous des pressions de branche d'alimentation en gaz P₁ᵢ et des pressions de ligne principale P₀ᵢ est l'ouverture de vanne régulatrice lorsque tⱼ≥20%, et tⱼ est le taux de stabilité continue du débit réel dans la portée de la précision de régulation-à-débit de conception.

4. Procédé de contrôle de régulation-à-débit pour un groupe de vannes d'alimentation en gaz, selon la revendication 3, **caractérisé en ce que** tⱼ=Tⱼ/T₀ⱼ×100% , où Tⱼ est une durée de stabilité continue du débit réel dans la portée de la précision de régulation-à-débit de conception, et T₀ⱼ est une durée d'alimentation en gaz définie du débit de conception de modèle d'alimentation en gaz Qⱼ.

5. Procédé de contrôle de régulation-à-débit pour un groupe de vannes d'alimentation en gaz, selon l'une quelconque des revendications 1 à 4, **caractérisé en ce que** la précision de régulation-à-débit de conception Rⱼ=±(7.25-1.161n(Qⱼ)), où Rⱼ est la précision de régulation-à-débit de conception, et Qⱼ(Nm³/h) est le débit de conception de modèle d'alimentation en gaz.

6. Procédé de contrôle de régulation-à-débit pour un groupe de vannes d'alimentation en gaz, selon l'une quelconque des revendications 1 à 5, **caractérisé en ce que** dans l'étape 7, le fait de déterminer si le débit réel Q_{j'} est dans un état stable au moyen du modèle d'alimentation en gaz, comprend les résultats suivants :
si la précision de régulation-à-débit réelle R_{j'} ≤ la précision de régulation-à-débit de conception Rⱼ, le débit réel Q_{j'} est dans un état stable ;
si la précision de régulation-à-débit réelle R_{j'} > la précision de régulation-à-débit de conception Rⱼ, le débit réel Q_{j'} est dans un état instable.

7. Procédé de contrôle de régulation-à-débit pour un groupe de vannes d'alimentation en gaz, selon la revendication 6, **caractérisé en ce que** la précision de régulation-à-débit réelle Rj_{'}=|(Qⱼ-Qⱼ)/Qⱼ|.

8. Procédé de contrôle de régulation-à-débit pour un groupe de vannes d'alimentation en gaz, selon l'une quelconque des revendications 1 à 7, **caractérisé en ce que** les conditions de mise à jour comprennent les faites suivantes :
déterminer au moyen du modèle d'alimentation en gaz si la précision de régulation-à-débit réelle R_{j'} est dans la portée de la précision de régulation-à-débit de conception Rⱼ, et si le taux de stabilité continue tⱼ du débit réel dans la portée de la précision de régulation-à-débit de conception Rⱼ est ≥20% ;
si la précision de régulation-à-débit réelle R_{j'} est ≤ la précision de régulation-à-débit de conception Rⱼ, et si le taux de stabilité continue tⱼ du débit réel dans la portée de la précision de régulation-à-débit de conception Rⱼ est ≥20%, mettre le débit réel Q_{j'} dans un état stable, sans avoir besoin de mettre à jour Kⱼ et K, et finir de la régulation-à-débit de la vanne d'alimentation en gaz.

9. Procédé de contrôle de régulation-à-débit pour un groupe de vannes d'alimentation en gaz, selon la revendication 8, **caractérisé en ce que** les conditions de mise à jour comprennent les faites suivantes :
si la précision de régulation-à-débit réelle R_{j'} est ≤ la précision de régulation-à-débit de conception Rⱼ, et si le taux de stabilité continue tⱼ du débit réel dans la portée de la précision de régulation-à-débit de conception Rⱼ est <20%, mettre le débit réel Q_{j'} dans un état instable, et contrôler automatiquement la régulation de l'ouverture de vanne régulatrice au moyen du modèle d'alimentation en gaz, afin de mettre le taux de stabilité continue tⱼ du débit réel dans la portée de la précision de régulation-à-débit de conception Rⱼ à ≥20%, et enregistrer l'ouverture de vanne régulatrice, et mettre à jour Kⱼ et K, et finir le régulation-à-débit de la vanne d'alimentation en gaz.

10. Procédé de contrôle de régulation-à-débit pour un groupe de vannes d'alimentation en gaz, selon la revendication 8 ou 9, **caractérisé en ce que** les conditions de mise à jour comprennent les faites suivantes :
si la précision de régulation-à-débit réelle R_{j'} est > la précision de régulation-à-débit de conception Rⱼ, et si le taux de stabilité continue tⱼ du débit réel dans la portée de la précision de régulation-à-débit de conception Rⱼ est <20%, mettre le débit réel Q_{j'} dans un état instable, et contrôler automatiquement la régulation de l'ouverture de vanne régulatrice au moyen du modèle d'alimentation en gaz, afin de mettre le taux de stabilité continue tⱼ du débit réel dans la portée de la précision de régulation-à-débit de conception Rⱼ à ≥20%, et enregistrer l'ouverture de vanne régulatrice, et mettre à jour Kⱼ et K, et finir le régulation-à-débit de la vanne d'alimentation en gaz.
